# EUROPEAN PATENT APPLICATION

(11) **EP 1 176 326 A1**
(43) Date of publication of application: **30.01.2002**
(21) Application number: 00830530.2
(22) Date of filing: 26.07.2000
(51) Int. Cl.: F16D 3/84

(54) **Device for protecting joints**

(71) Applicant: Falga S.r.l., 28011 Armeno (NO) (IT)
(72) Inventor: Brigatti, Francesco, 28011 Armeno, NO (IT)
(74) Representative: Valentini, Giuliano

(57) **Abstract**

It is disclosed a device or boot (10) of a universal type for protecting an articulated rotating joint, of the type made of soft and elastic material and having at least one end (13,15) provided with one or more mounting sections (16a,16b,16c,16d) which comprise removable sealing elements (20b,20c,20d) placed on the internal walls of the mounting sections.

## Description

The present invention relates in general a device or boot for protecting an articulated rotating joint, of the type generally made of a soft and flexible material, such as an elastomer or the like, and in particular a universal-type protective boot, i.e. of the type designed to be mounted on joints having different sizes and characteristics.

These devices or boots find an application, for example, in the automobile industry, for protecting articulated rotating joints from external dust and impurities, as well as for retaining a certain amount of lubricating grease in contact with the joint, in order to guarantee proper operation of the joint itself.

Protective boots are generally mounted with one end that surrounds the shell of the joint and which is held firmly in position by a clamp, whereas the other end is generally fitted in a sealed way on a shaft coming out of the joint, this end too being secured by a clamp.

Automobile manufacturers use various types of joints, both as regards the size and the characteristics of the surface on which the boot is to be mounted. Apart from the size, the most common types of joints, at the end where the boot is to be mounted, have a shell portion which may be smooth to offer a wide surface of contact between the boot and the shell of the joint, or else may be provided with one or more external annular grooves having a substantially quadrangular section which are designed to receive a seal profile protruding from the inner surface of the boot.

Consequently, above all in the spare parts industry, the need is particularly felt to have available a "universal" protection boot, namely a protective boot that may be suitable for being mounted on any type of joint, irrespective of the size of the latter or of the type of surface designed to receive the boot.

Up to now numerous attempts have been made for producing universal boots, as, for example, that described in Patent Application FR-A-2.729.725. The boot proposed in this document of the prior art comprises at least one end portion provided with cylindrical mounting sections having different diameters in order to adapt to the typical dimensions of the most widespread joint shells and to enable removal of possible exceeding portions.

Each mounting section moreover comprises a V-shaped annular fold which, once the clamp has been tightened, may be flattened onto the outer surface of the joint shell in case an annular groove for a sealing element is not provided on the latter, or else may be inserted with its tip portion inside the groove in case a groove is provided on the joint shell.

This solution, however, has various drawbacks. First of all, when the boot is to be mounted on a smooth shell, the presence of the V-shaped fold make it difficult the proper positioning of the boot on the shell.

On the other hand, if the boot is mounted on a joint shell provided with a groove, the "V" shape of the fold does not fit perfectly in the quadrangular-section groove since the tip portion of the fold abuts in irregular way against the bottom of the groove. Consequently, once the clamp has been tightened, the walls of the V-shaped fold tend to get deformed and to lose contact with the edges of the groove, thus creating areas in which loss of tightness of the seal may occur.

One object of the present invention is to overcome the above-mentioned drawbacks of the prior art by proposing a universal device or boot for protecting an articulated rotating joint that may be more reliable as far as sealing is concerned.

Another object of the present invention is to propose a device of the above mentioned type that may be adapted in a particularly simple way for mounting on joints of any type, in particular both of the type with a smooth shell and of the type with a shell provided with an annular groove.

These objects are achieved according to the present invention thanks to a device or boot for protecting an articulated rotating joint, of the type made of soft and elastic material and comprising a tubular body having opposite end portions, the end portions comprising one or more substantially cylindrical mounting sections designed to be mounted in a sealed way, one on the outer shell of the joint and one on the shaft coming out of the joint, characterized in that it comprises one or more removable sealing elements placed on the internal wall of one or more of the above-mentioned mounting sections.

In this way, it is possible to mount the boot provided with the sealing element on joints having one or more grooves made on the outer shell, whilst in case where the shell of the joint is smooth, it is possible to remove the sealing element, thus leaving a smooth cylindrical surface in contact with the shell of the joint.

According to a preferential aspect, the sealing elements are made of a single piece with the internal walls of the mounting sections. This enables to form the device with a single moulding operation, thus also rendering the production of a boot according to the present invention particularly inexpensive.

The sealing elements preferably have a substantially circular cross section. In this case, when the boot is mounted on a joint provided with a groove, the sealing element penetrates uniformly under the tightening action of the clamp and comes into contact with all the walls of the groove, thus ensuring an optimal seal. The circular cross section of the sealing elements moreover guarantees optimal adaptation to any type of cross section of the groove or grooves.

The invention will now be described, purely to provide examples, with reference to the schematic attached drawings, in which:
- Figure 1 is a sectional view of a portion of a protective boot according to the present invention;
- Figure 2 is an enlarged view of a detail of Figure 1;
- Figure 3 is a view showing a detail of the boot mounted on a joint shell having a smooth surface;
- Figure 4 is a view showing a detail of the boot mounted on a joint shell which is provided with a groove; and
- Figure 5 is an enlarged sectional view of a detail of Figure 4.

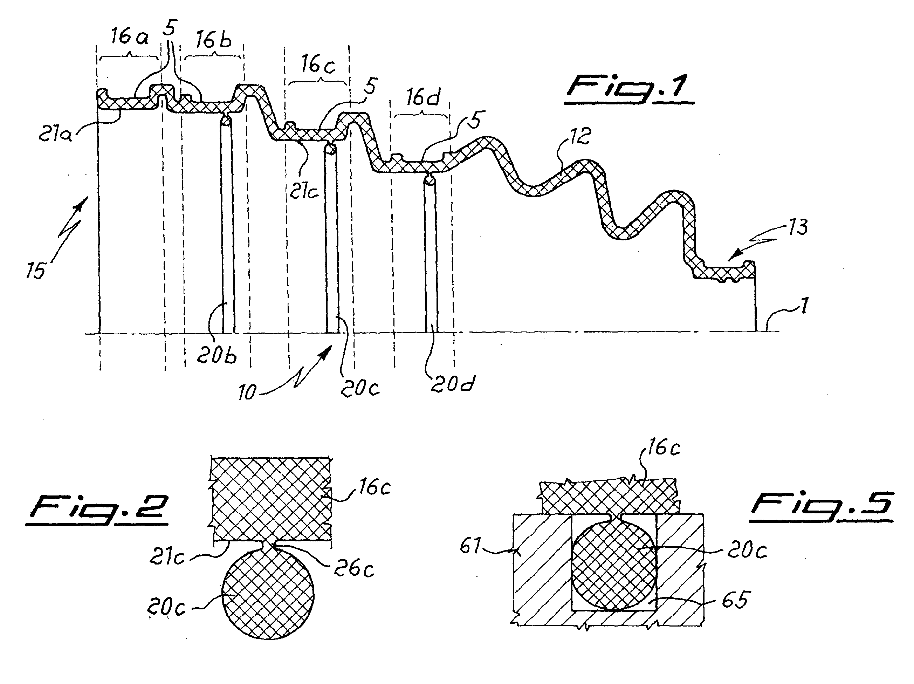

In Figure 1, only one half-portion of a universal protective device or boot 10 for an articulated rotating joint is represented for sake of simplicity. The remaining portion of the boot is specularly identical with respect to the symmetry axis 1.

The protective boot 10 is made of soft and elastic material, such as an elastomer or the like, and basically comprises a tubular body 12 having the shape of a cone or a truncated cone with an undulated pattern to enable flexure of the boot 10, as well the extension and contraction in the axial direction of the boot itself.

In the embodiment shown in Figure 1, the boot 10 comprises two end portions 13 and 15 having different diameters. The portion 13 is substantially cylindrical and is shaped in such a way that it can be put onto a shaft coming out from the joint (not shown in Figure 1) and can be tightened on the shaft to form a seal.

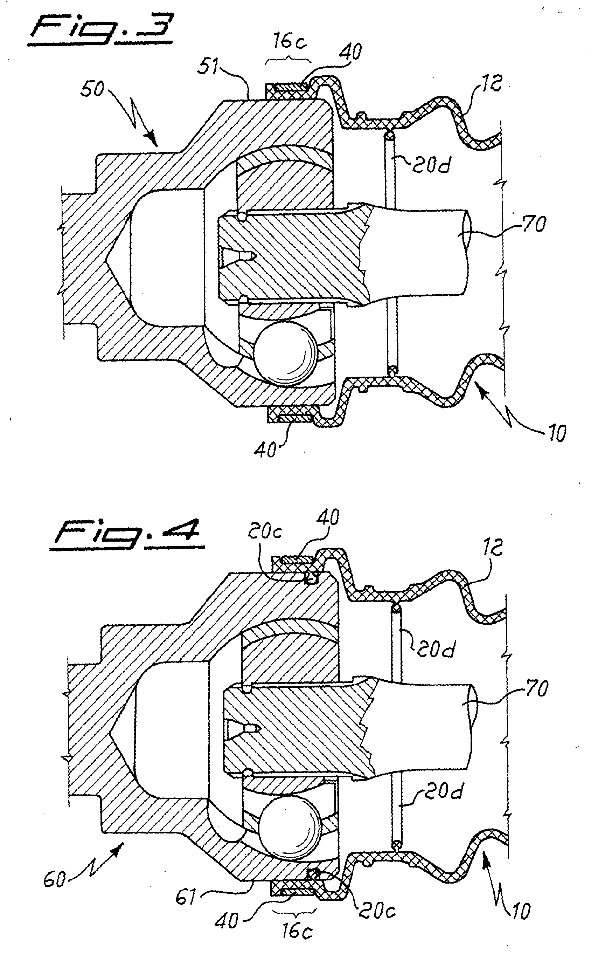

The end portion 15 comprises one or more substantially cylindrical mounting sections 16a, 16b, 16c, and 16d having different diameters which substantially correspond to the dimensions of the outer shells of the most widespread articulated joints. On the outer wall of the boot 10, in positions corresponding to each mounting section 16a-16d, there are provided seats 5 having appropriate shapes and sizes for receiving a clamp 40 (Figures 3 and 4).

Each mounting section of a diameter larger than that of the section used, for example 16a and 16b in Figures 3 and 4, may be cut away in case the boot 10 is mounted on a joint having a diameter corresponding to that of the section of immediately smaller diameter, for instance 16c in Figures 3 and 4.

According to a particularly advantageous aspect of the present invention, one or more removable sealing elements are envisaged which are set on the internal walls of the mounting sections, such as the sealing elements 20b, 20c and 20d. In the view represented in Figure 1, the mounting section 16a having the largest diameter is illustrated without a corresponding element in order to show the smooth conformation assumed by the internal wall 21a of the mounting section 16a after removal of the corresponding sealing element.

Figure 2 is a view in greater detail of the section of the sealing element 20c in correspondence to the section 16c.

The sealing element 20c has a continuous annular development and a substantially circular section. In practice, the sealing element 20c is made of one piece with the internal wall of the mounting section 16c and is connected to the latter by means of a connecting portion 26c.

The sealing element 20c may therefore be left in position in case boot 10 is to be mounted on a joint with a shell provided with one of more grooves (Figure 4), or else may be removed, thus leaving the wall 21c smooth, in the case where the boot 10 is to be mounted on a joint with a smooth shell.

It should be emphasized that also the other sealing elements, in particular elements 20b and 20d represented in Figure 1, are made in the same way as element 20c, and thus also these can be left in position or removed according to the type of joint on which the boot is to be mounted.

In the example illustrated in Figure 3, a joint 50 is shown which is provided with a shell 51 having a completely smooth outer surface. The universal protective boot 10 made according to the present invention is mounted on the joint 50 with its end of larger diameter mounted on the shell 51 in a position corresponding to the mounting section 16c, and with its end of smaller diameter (not shown) mounted on the shaft 70 coming out of the joint 50.

In this case, the mounting sections 16a and 16b have been removed, for example by means of a cut made before the seat 5 of the section 16c that receives the clamp 40. Since no groove is present in the shell 51 of the joint 50, also the sealing element 20c has been removed, thus allowing the smooth surface 21c, present on the internal wall in a position corresponding to the mounting section 16c, to adhere throughout its extension to the outer surface of the shell 51. By tightening the clamp 40, an optimal seal is thus obtained between the smooth surfaces of the joint 50 and of the boot 10 that are in contact with one another.

An example of the universal protective boot 10 mounted on a joint 60 with a shell 61 provided with a groove 65 is shown in Figures 4 and 5. Also in this case, the boot made according to the present invention is mounted on the shell 61 in a position corresponding to the mounting section 16c and with its end of smaller diameter (not shown) mounted on the shaft 70 coming out from the joint 60.

In the same way as for the case illustrated in Figure 3, the mounting sections 16a and 16b have been removed by making a cut before the seat 5 of the section 16c that receives the clamp 40. Differently from the previous case, the sealing element 20c has been left in position so as to be housed in the groove 65.

As is illustrated in greater detail in Figure 5, the sealing element 20c is inserted into the groove 65 in such a way as to come into tight contact with all the internal walls of the groove, thus guaranteeing, after tightening of the clamp, an optimal seal and certainly a more reliable seal as compared to known protective devices.

Other variations may be made without departing from the scope of the present invention. For example, the sealing elements may be provided only with some of the mounting sections and be absent in the positions corresponding to the remaining sections, in relation to the types of joints on which the universal boots according to the present invention are to be mounted.

Likewise, also the end portion 13 may have a diameter different from the one represented, and also this end portion may be provided with a number of mounting sections possibly equipped with removable sealing elements, again in relation to the types of joints on which the universal protective boot according to the present invention is to be mounted.

## Claims

1. A device or boot for protecting an articulated rotating joint, of the type made of soft and elastic material and comprising a tubular body having opposite end portions, said end portions comprising one or more substantially cylindrical mounting sections designed to be mounted in a sealed way, one on the outer shell of said joint and one on the shaft coming out of said joint, **characterized in that** it comprises one or more removable sealing elements placed on the internal wall of one or more of the above-mentioned mounting sections.

2. A device according to Claim 1, in which said sealing elements are made of one piece with the internal walls of said one or more mounting sections.

3. A device according to Claim 1, in which said sealing elements have a continuous annular development.

4. A device according to Claim 1, in which said sealing elements have a substantially circular cross section.

5. A device according to Claim 1, in which said tubular body has a central portion substantially shaped as a cone or a truncated cone.

6. A device according to Claim 5, in which said central portion has a substantially undulated shape to enable flexure of the device, as well as extension and contraction in the axial direction of the device.

7. A device according to Claim 1, in which said opposite end portions have different diameters.

8. A device according to Claim 7, in which said sealing elements are placed at least in positions corresponding to the mounting sections present on the end portion of larger diameter.
